# EUROPEAN PATENT SPECIFICATION

(11) **EP 1 553 760 B1**
(45) Date of publication and mention of the grant of the patent: **27.02.2019**
(21) Application number: 03715423.4
(22) Date of filing: 26.03.2003
(51) Int. Cl.: H04N 5/376, H04N 5/345

(54) **IMAGING APPARATUS ALLOWING A PLURALITY OF REGIONS TO BE READ**
ABBILDUNGSVORRICHTUNG, DIE EIN LESEN MEHRERER REGIONEN ERLAUBT
DISPOSITIF D'IMAGERIE CAPABLE DE LIRE UNE PLURALITE DE ZONES

(30) Priority: 13.06.2002 JP 2002172794
(43) Date of publication of application: 13.07.2005
(73) Proprietor: Toshiba Teli Corporation, Hino-shi, Tokyo 191-0065 (JP)
(72) Inventor: ABE, Kouki c/o Toshiba Teli Corporation, Hino-shi, Tokyo 191-0065 (JP); KUMAZAWA, Takashi c/o Toshiba Teli Corporation, Hino-shi, Tokyo 191-0065 (JP); MAKINO, Sei c/o Toshiba Teli Corporation, Hino-shi, Tokyo 191-0065 (JP); KISHI, Junji c/o Toshiba Teli Corporation, Hino-shi, Tokyo 191-0065 (JP)
(74) Representative: Zech, Stefan Markus
(86) International application number: PCT/JP2003/003732
(87) International publication number: WO 2003/107660

(56) References cited:
- EP-A- 0 994 619
- JP-A- 8 237 550
- JP-A- 10 262 187
- JP-A- 57 104 829
- JP-A- 2000 041 186
- JP-A- 2000 209 509
- JP-A- 2002 051 261
- US-A- 5 267 296
- US-B1- 6 320 934

## Description

### Technical Field

The present invention relates to an imaging apparatus, especially using, for example, a CMOS sensor in an imaging unit. More particularly, the invention is applicable as a parts inspection machine for electronic devices such as a liquid crystal device and a semiconductor device. It can be also used as a monitoring apparatus.

### Background Art

As an imaging apparatus using photoelectric conversion elements, a CCD type imaging apparatus and a CMOS type imaging apparatus are known. In a CCD type imaging apparatus, photoelectric conversion elements are arrayed two-dimensionally, and imaging signals in field units are read out therefrom. In a CMOS type imaging apparatus, on the other hand, imaging signals in pixel units can be directly read out from photoelectric conversion elements arranged two-dimensionally.

Using such an imaging apparatus, a monitoring system or parts inspection system has been developed. In a conventional monitoring system or parts inspection system, imaging signals are read out from the entire surface of the imaging unit, and the imaging signals are transferred into a monitor or comparator circuit. In a monitoring system, the user checks the image on the monitor screen. In a parts inspection system, the comparator circuit compares a reference pattern and an image pattern of the imaging signal.

In the conventional monitoring system or parts inspection system, since the imaging signal is read out from the entire surface of the imaging unit, the reading time cannot be shortened, and when the imaging signal is converted from analog to digital, the data conversion quantity is a lot of. Accordingly, in the monitoring system, since the entire screen is always displayed, local checking of the image is difficult, and also in the parts inspection system, since the imaging signal of the entire screen is processed, it is hard to inspect at high speed.

### Disclosure of Invention

It is hence an aspect of the invention to provide an imaging apparatus capable of limiting imaging signals obtained from an imaging unit to signals from arbitrary plural regions in an imaging plane, checking local images easily, and processing signals at high speed.

This invention relates to an imaging apparatus as defined in claim 1.

### Brief Description of Drawings

FIG. 1 is an explanatory view showing an outline of a parts inspection system
FIG. 2 is block diagram showing a basic configuration in a camera in FIG. 1.
FIG. 3 is a diagram showing an example of setting of imaging regions in an imaging apparatus
FIG. 4 is a diagram showing an example of the case where imaging regions are set for explaining an example of operation of the imaging apparatus.
FIG. 5A to FIG. 5H are time charts showing timing signals relating to the Y-direction for reading out imaging signals from the imaging regions in FIG. 4.
FIG. 6A to FIG. 6F are time charts showing timing signals relating to the Y-direction for reading out imaging signals from the imaging regions in FIG. 4.
FIG. 7 is an explanatory diagram showing an iris and focus control system in the imaging apparatus.
FIG. 8 is a diagram showing another example of setting of regions for reading out imaging signals in the imaging apparatus.
FIG. 9 is a diagram showing another example of setting of regions for reading out imaging signals in the imaging apparatus of the invention.

### Best Mode for Carrying Out the Invention

Referring now to the drawings, an example of an imaging apparatus will be described detail below.

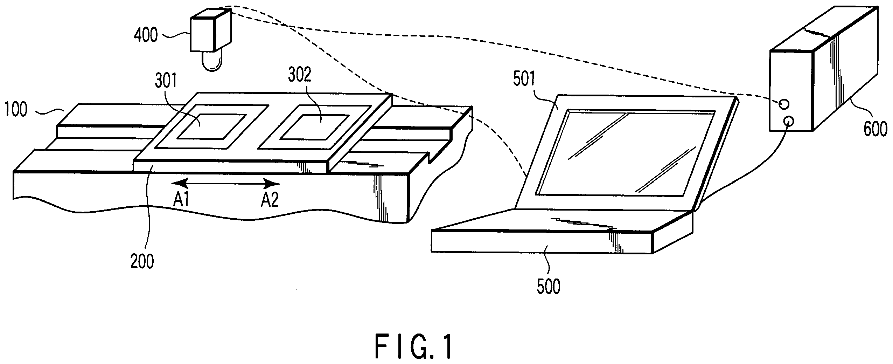

FIG. 1 shows a simplified configuration of a parts inspection apparatus to which the invention is applied. Reference numeral 100 is an inspection table, and a carrier board 200 is placed on the top of the inspection table 100, and this carrier board 200 is free to move in the direction of arrow A1-A2 in the diagram, and is automatically controlled by a control unit (not shown).

Test pieces 301, 302 can be put on the top of the carrier board 200. A camera 400 is located at a predetermined position above the inspection table 100. The carrier board 200 can transfer the test pieces 301 and 302 selectively to the lower part of the camera 400 and stop. The camera 400 takes the top of the test piece 301 or 302, and outputs an image signal. The image signal is input into, for example, a personal computer 500, and is shown as an image on a display 501.

Reference numeral 600 is an inspection unit, which can provide the camera 400 with a timing signal, a control signal, address data and the like. The inspection unit 600 can generate address data according to an operation signal from the personal computer 500.

The inspection unit 600 can receive an image signal through the personal computer 500. Receiving an image signal, the inspection unit 600 can compare with reference data, and feed back the pattern comparison result to the personal computer 500.

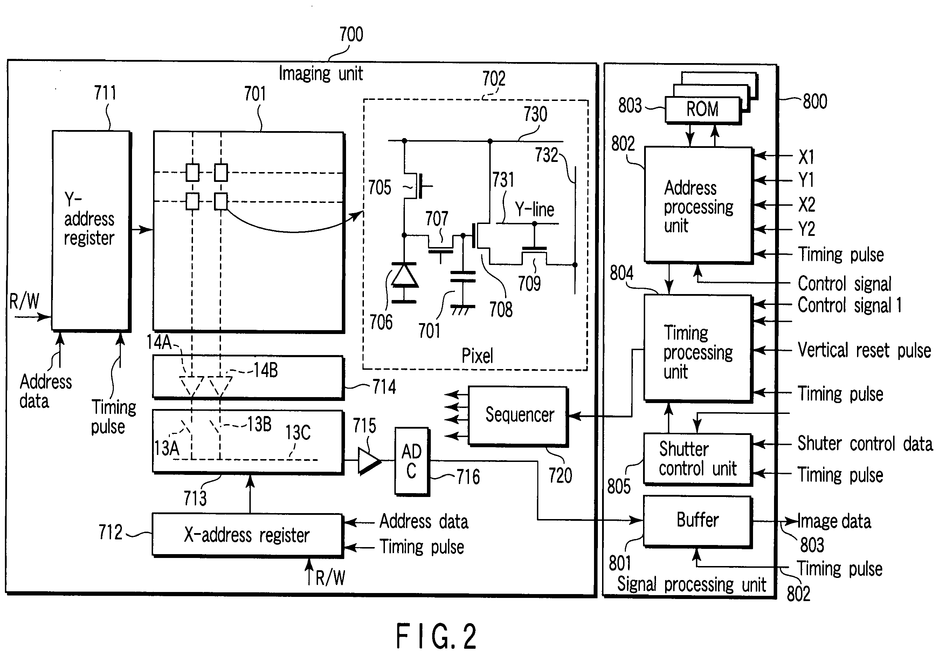

FIG. 2 is a block diagram showing essential parts of the camera 400 described above. The camera 400 comprises an imaging unit 700 and a signal processing unit 800. The imaging unit 700 has an imaging region 701 in which plural pixels are arrayed two-dimensionally, and each pixel has an independent address, and a reading address is given to each pixel.

Each pixel is identical in composition, and one is magnified and shown as pixel 702 enclosed by broken line to show a basic composition. Reference numeral 730 is a line for resetting provided with a supply voltage. Reference numerals 731 and 732 are bus lines for specifying the address of the pixel by column and row.

A switch element (for resetting) 705 and a photoelectric conversion element 706 are connected in series between a line 703 and reference potential. An output end of the photoelectric conversion element 706 is connected to input units (gate electrodes) of a capacitor 701 and an amplifying element 708 through a switch element 707 for sampling. One electrode of the amplifying element 708 is connected to the line 730 as the power source, and the other electrode is connected to one electrode of a switch element (for reading) 709. The other electrode of the switch element 709 is an output unit, which is connected to a bus line 732 as a column bus.

When the switch element 705 is turned on, the electric charge in the photoelectric conversion element 706 is discharged and reset. When the switch element 705 is turned off, the photoelectric conversion element 706 begins to be charged depending on the quantity of light from outside. The charge period is limited at the point when the switch element 707 for sampling is turned on. When the switch element 707 for sampling is changed from OFF to ON position, a voltage depending on the electric charge collected in the photoelectric conversion element 706 is supplied into the capacitor 701.

When the switch element 709 is turned on at the reading point, the output current of the amplifying element 708 flows in the line 732 through the switch element 709. That is, in the column bus line 732, a voltage appears in proportion to the electric charge collected in the capacitor 701.

In the diagram, the address line is simplified, but a Y-address register 711 can specify all Y-lines in the imaging region 701 individually. Alternatively, an arbitrary Y-line can be specified.

An X-address register 712 controls an analog multiplexer 713. The analog multiplexer 713 is for taking in the output from a line amplifier 714 connected to each X-line. In FIG. 2, line amplifiers 14A, 14B are shown representatively, but actually they are connected to each X-line. The analog multiplexer 713 has switch elements 13A, 13B corresponding to the line amplifiers 14A, 14B. In FIG. 2, the switch elements 13A, 13B are shown representatively, but actually they correspond to each line amplifier. When the switch elements 13A, 13B are turned on, corresponding X-line signals appear on a common line 13C.

When the switch element 13A or 13B of the analog multiplexer 713 is turned on by the X-address register 712, the signal on the X-line corresponding to the switch element 13A or 13B is put into an amplifier 715.

The output signal of the amplifier 715 is converted into a digital signal by an analog-digital converter (ADC) 716, and is supplied into a buffer 801 in the signal processing unit 800. Data input and output of the buffer 801 is controlled by a timing pulse applied to an input terminal 802. The output from the buffer 801 is sent out to an output terminal 803 as image data.

Corresponding to the Y-address register 711 and X-address register 712 of the imaging unit 700, the Y- and X-address data can be set. The Y- and X-address data can be set by way of a sequencer 720 from the signal processing unit 800. When the Y- and X-address data are set, the Y-address register 711 and X-address register 712 are set in the writing mode. Consequently, the Y-address data and X-address data are output from the sequencer 720, and a timing pulse (writing clock) is given to the Y-address register 711 and X-address register 712.

A method of setting Y-address data and X-address data is not limited to this explanation, but various methods are possible. For example, plural stages of address registers are prepared in the Y-address register 711, and address data is preliminarily latched in one Y-address register (for presetting), and when this address data is needed, it is transferred in batch to the other Y-address register (for operation). In this case, the reading address can be changed in a short time.

The sequencer 720 not only writes and reads each address data of the Y-address register 711 and X-address register 712, but also outputs the timing pulse of each part in the imaging unit 700. For example, there are a reset pulse for giving to the pixel, a sampling pulse, and a reading timing pulse. Further, the sequencer 720 also outputs a clock and a timing pulse to the analog-digital converter (ADC) 716.

The signal processing unit 800 has address control means for arbitrarily controlling the address set in the Y-address register 711 and X-address register 712 in the imaging unit 700.

The address processing unit 802 can take in address setting data from outside. Address setting data preliminarily stored in a ROM 803 can be also taken into the address processing unit 802. Whether to select the address setting data from outside or address setting data from the ROM 803 is determined by a control signal.

The address processing unit 802 generates Y-address data or X-address data depending on the address setting data, and gives to a timing processing unit 804. The timing processing unit 804, as explained above, gives the Y-address data and X-address data to the sequencer 720. As a result, address data is set in the Y-address register 711 and X-address register 712. The timing of setting the address data is determined by a control signal that is given to the timing processing unit 804.

After setting of address data in the Y-address register 711 and X-address register 712, an imaging signal is read out from the imaging unit 700. The process of obtaining the imaging signal from the imaging unit 700 is the procedure of resetting, exposing, sampling and signal reading. For resetting, an exposure pulse is input into the switch element for resetting, and each pixel in the imaging region 701 is reset in batch before start of exposure operation.

Next is the exposure operation. The exposure time is determined by shutter control data given to a shutter control unit 805. The shutter control data is given to a timing processing unit 804. The timing processing unit 804 sets the period from reset point till output of the sampling pulse on the basis of the shutter control data.

Reading of imaging signal is executed when a reading start pulse is given to the Y-address register 711 and X-address register 712. The output timing of the reading start pulse is also determined by the timing processing unit 804. The output timing of the reading start pulse is determined by the control signal given to the timing processing unit 804.

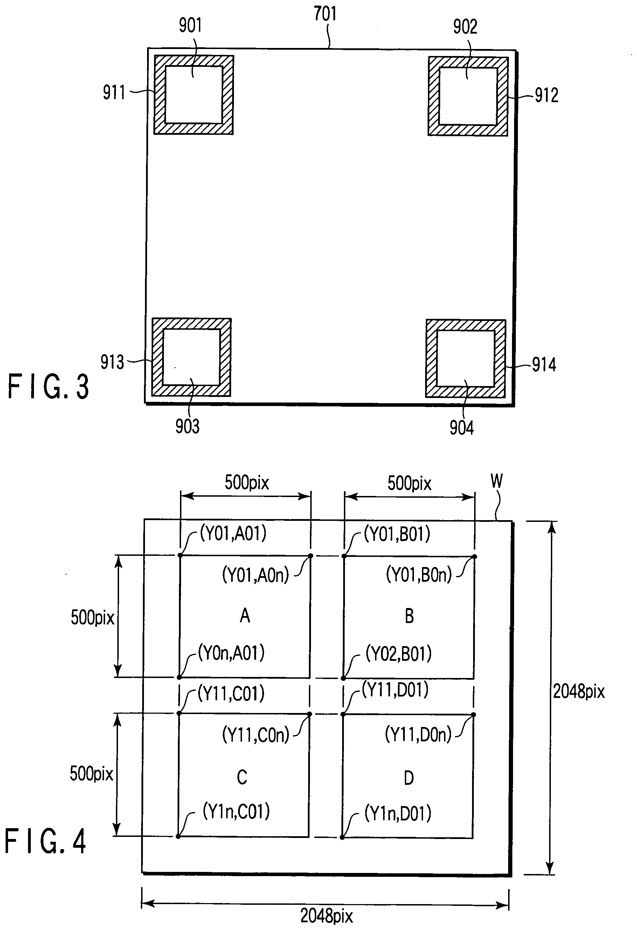

FIG. 3 shows an example of an image projected in the imaging region 701. In this example, subject images 901, 902, 903, 904 are projected in four corners of the imaging region. In the case of such imaging environment, the regions set by the Y-address register 711 and X-address register 712 are regions 911, 912, 913, 914 including the subject images 901, 902, 903, 904.

FIG. 4, FIG. 5A to FIG. 5F, and FIG. 6A are simplified principle explaining diagrams for describing the reading timing of imaging signals when the reading regions are set partially as explained above, and show reading regions and various timings.

As shown in FIG. 4, in a whole region W to be imaged, it is assumed that start addresses of certain regions A, B, C, D are (Y01, A01), (Y01, B01), (Y11, C01), and (Y11, D01). The number of pixels in the entire imaging region is 2048 x 2048 pixels. In each one of regions A, B, C, D, the number of pixels is 500 x 500 pixels.

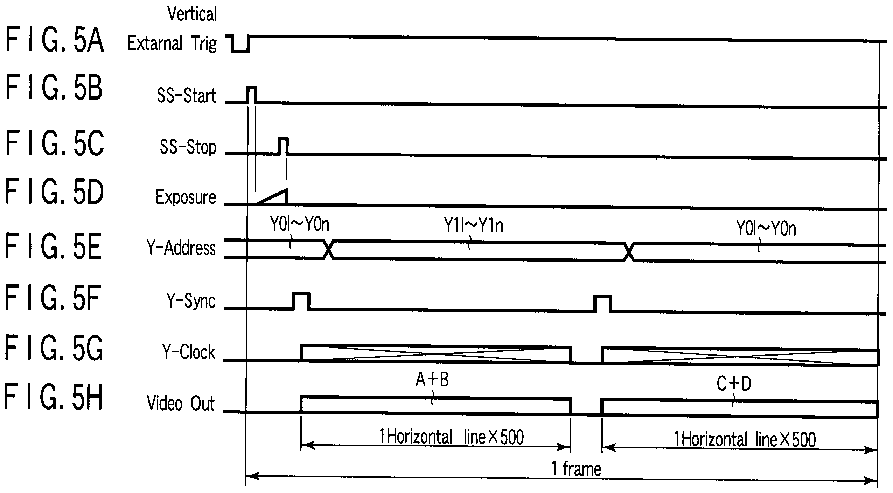

In FIG. 5A to FIG. 5F, specifically, FIG. 5A shows a trigger pulse, which is given as a control signal to the timing processing unit 804. In consequence, a shutter start pulse (corresponding to the reset pulse) in FIG. 5B is given to the imaging region 702. Exposure of the photoelectric conversion element starts, and a shutter end pulse (corresponding to the sampling pulse) is given to the imaging region 702 after a reset time determined by the shutter control data (FIG. 5C). In the period from the shutter start pulse till the shutter end pulse, the photoelectric conversion element is exposed, and an electric charge is collected (FIG. 5D).

In the Y-address register 711, a vertical synchronizing pulse (FIG. 5F) is given, and at the same time, the data for specifying the first address Y01 is set (FIG. 5E).

The vertical synchronizing pulse mentioned herein is different in meaning from the vertical synchronizing pulse of a video camera or the like, and it refers to the pulse for setting the Y-direction address in the register.

Next, a clock pulse (FIG. 5G) is given to the Y-address register 711. As a result, the reading address in the Y-direction in the regions A, B is incremented. Hence, the data in the regions A, B is read out. This increment is added by one each every time a horizontal synchronizing signal is given to the Y-address register 711 as a timing pulse.

When the address in the Y-direction reaches address Y0n, a vertical synchronizing pulse (FIG. 5F) is given to the Y-address register 711. At this time, the sequencer 720 gives the address Y11 to the Y-address register 711.

As a result, the address in the Y-direction jumps to Y11. Next, a change is made in addresses Y11 to Y1n in the Y-direction. That is, the reading address in the Y-direction in the regions C, D is incremented. Thus, the data in the regions C, D is read out.

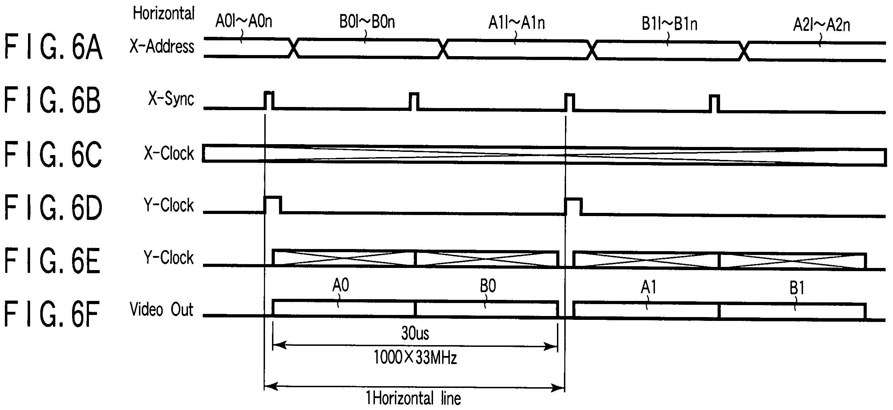

FIG. 6A to FIG. 6F show relation of address changes and reading regions in the X-direction. In the X-address register 712, a first horizontal synchronizing pulse (FIG. 6B) is given to the X-address register 712 by way of the sequencer 720, and data for specifying the address A01 is given at the same time (FIG. 6A). As a result, the address A01 is outputted from the X-address register 712, and it is incremented to change from A01 to A0n. This change is obtained as the clock pulse (FIG. 6C) is given to the X-address register 712.

When the address in the X-direction reaches the address A0n, a horizontal synchronizing pulse is given to the X-address register 712, and the data for specifying the address B01 is given at the same time. As a result, the address in the X-direction jumps to B01. Thereafter, it is incremented to change from B01 to B0n.

When the address in the X-direction reaches the address B0n, a horizontal synchronizing pulse is given again to the X-address register 712, and the data for specifying the address A11 is given at the same time (FIG. 6A). As a result, the address A11 is issued from the X-address register 712, and it is incremented to change from A11 to A1n.

In this way, at every horizontal synchronizing pulse, the reading start position changes from setting data A01, B01, to A11, B11, A21, B21, ..., C01, D01.

Thus, by the Y-address and X-address, data in the regions A, B, C, D are read out.

Features of the imaging apparatus and method capable of reading out a plurality of regions mentioned above may be summarized as follows.

When an imaging signal is read out from the imaging unit 700, there is provided the signal processing unit 800 which generates the address for specifying arbitrary plural regions in the imaging region. The pixel 702 has the photoelectric conversion element 706, and switch elements 705, 707, 708, and 709 for resetting this photoelectric conversion element, exposing, and reading out the signal from the photoelectric conversion element. It also includes a plurality of address lines.

The imaging unit 700 comprises the Y-address register 711 for selecting an arbitrary line out of plural Y-address lines, the X-address register 712 for selecting an arbitrary line out of plural X-address lines, and the sequencer 720 for providing at least the X-, Y-address registers with address data for specifying arbitrary plural regions. The signal processing unit 800 has the address processing unit 802 for transferring address data to the sequencer 720.

The signal processing unit 800 may also have a memory (RAM or ROM 803) having stored therein address data for specifying arbitrary plural regions A, B, C, D.

The signal processing unit 800 may also have plural memories (ROM 803) having the address data stored therein in order to change the sequence position (combination) of plural regions. The address processing unit 802 may also have an address input unit for taking therein the address data for specifying plural regions from outside.

The imaging unit 700 takes images of plural inspection subjects, and the signal processing unit 800 may have means for changing the sequence position of plural regions depending on the inspection subjects.

The structure may further comprise a display for monitoring imaging signals from the imaging unit 700, an iris mechanism and a focus mechanism of the front surface of the imaging unit, and an imaging condition control device for controlling the iris mechanism and focus mechanism.

The imaging condition control device controls the iris mechanism and focus mechanism on the basis of imaging signals in the plural regions.

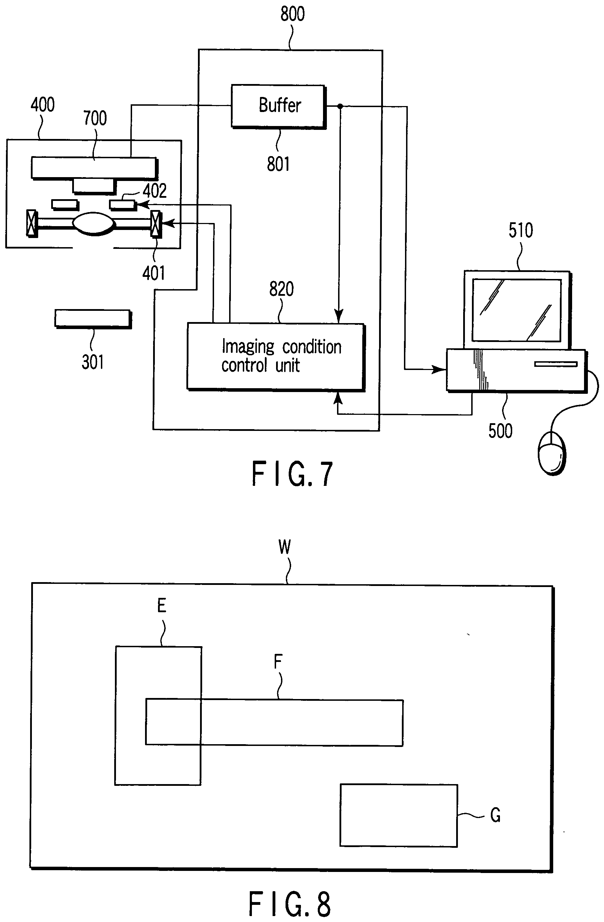

FIG. 7 shows a mode of use of the apparatus. The camera 400 has a focus adjusting mechanism 401 and an iris adjusting mechanism 402. The focus control signal and iris control signal are given from the imaging condition control unit 820. Herein, the imaging condition control unit 820 is controlled on the basis of the video signal obtained from the buffer 801.

The imaging condition control unit 820 creates focus and iris control data as follows. Initially, the camera 400 takes the entire image of the inspection subject 301. The taken image is shown in the display 510 of the personal computer 500. The user manipulates, for example, a mouse 511, and specifies desired plural regions (for example, A, B, C, D as mentioned above), and encloses by a window frame. By execution command, consequently, image data of the specified regions A to D is output in the buffer 801. The image data is taken into the imaging condition control unit 820.

Herein, (1) the iris is controlled. The imaging condition control unit 820 outputs and varies the iris control data. In the midst of variation of iris control data, when the luminance of the image data reaches a desired range, the iris control data is fixed. Next, (2) high frequency components of image data are extracted, and the focus control data is output for adjustment. In the midst of variation of focus control data, when the high frequency component reaches the peak, the focus control data is determined. Herein, the steps (1) and (2) may be repeated.

In this explanation, the plural regions A to D to be inspected are isolated and independent in the imaging plane. However, the apparatus is not limited to such regions, and partially overlapped regions may be also set easily.

FIG. 8 shows an example in which regions E, F, G are set in the whole region W, and partially overlapped regions E, F are set.

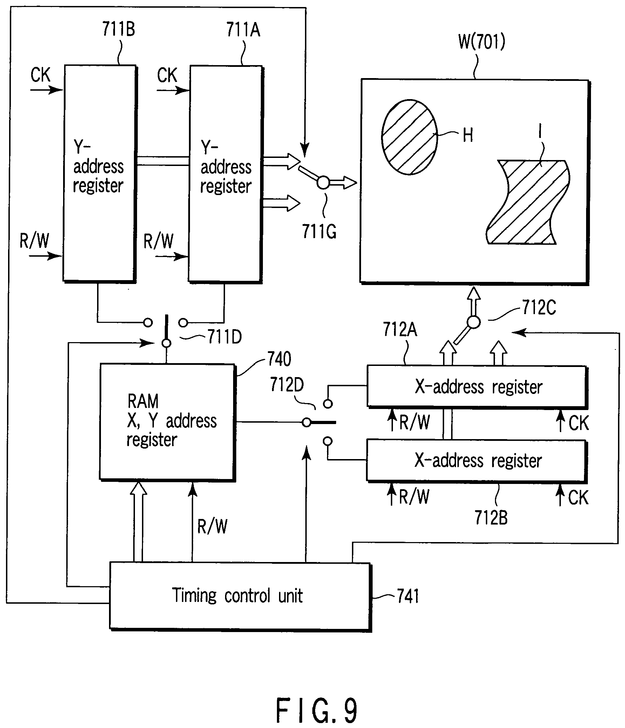

FIG. 9 shows an embodiment of the apparatus of the invention. This apparatus is suited to a case of changing over the address at high speed. In the prior explanation, the regions A to D are square, and the X-address and Y-address are incremented. However, the apparatus of the invention may have curved regions. Such regions may be also applied in the foregoing example. In this apparatus, there is a sufficient time allowance in address setting.

As shown in FIG. 9, assuming that regions H, I are set. In this case, the Y-address registers 711A, 711B are changed over alternately. When the address data of one Y-address register 711A (or 711B) is used, region specifying data for the next Y-address is written in the other Y-address register 711B (or 711A). A switch 711G is a switch for determining to use which data of the Y-address register 711A or 711B, and a switch 711D is a switch for determining to write address data in which one of the Y-address registers 711A, 711B.

The address data is output from a memory (RAM) 740. On the other hand, the X-address registers 712A, 712B are also changed over alternately. When the address data of one X-address register 712A (or 712B) is used, region specifying data for the next X-address is written in the other X-address register 712B (or 712A). A switch 712C is a switch for determining to use which data of the X-address register 712A or 712B, and a switch 712D is a switch for determining to write address data in which one of the X-address registers 712A, 712B.

The control timing of each part is set by the timing pulse and clock from a timing control unit 741.

The apparatus of the invention can be used not only as a monitoring system but also as a parts inspection system. When using as a monitoring system, it is effective when specifying the monitoring regions. For example, the entrance to a building or window can be set as a monitoring region. As a parts inspection system, it is effective when inspecting parts arranged on plural positions on a substrate by pattern matching. For example, parts to be inspected are disposed in the regions A to D.

Parts to be inspected include IC chips and semiconductor element parts. Not limited to parts, it is effective also when checking the characters, numbers and symbols printed on the printed circuit board or components. It is effective when checking whether or not specified parts are arranged correctly on the printed circuit board.

In the apparatus of the invention, moreover, since addresses of the regions A to D are specified, it is easy to incorporate image data from other regions than the regions A to D. It is hence effective to check whether or not undesired parts are put on other regions than the regions A to D, or check whether or not there is any defect (such as flaw) in other regions than the regions A to D.

The apparatus can incorporate only image data of necessary plural regions. To the contrary, it is not necessary to fetch image data of unnecessary regions or image data of all regions.

As a result, after a first exposure, the time required for fetching the image (reading time) from the imaging region is substantially shortened as compared with the prior art. It means that the inspection time can be shortened.

### Industrial Applicability

As above mentioned, the present invention related to an image pick up device, particularly using, for example, a CMOS sensor in an imaging unit. More particularly, the invention is applicable as a parts inspection machine for electronic devices such as a liquid crystal device and a semiconductor device. It can be also used as a monitoring apparatus.

## Claims

1. An imaging apparatus for use in an inspection machine which inspects the configuration of plural parts on a substrate (701), the apparatus comprising an imaging unit which comprises:
an imaging region having a plurality of X- address line and a plurality of Y-address lines formed thereon, a plurality of pixels being formed near the intersections of the X-address lines and the Y-address lines, each pixel having an independent address, wherein the imaging region provides each pixel with a reading address;
**characterized in that** said imaging unit further comprises:
a first Y-register (711A) and a second Y-register (711B) arranged to select an arbitrary line out of said plurality of Y-address lines;
a first X-register (712A) and a second X-register (712B) arranged to select an arbitrary line out of said plurality of X-address lines;
a first switch (711D) arranged to supply output address data to the first Y-register (711A) or the second Y-register (711B);
a second switch (711G) arranged to supply output address data from the first Y-register (711A) or the second Y-register (711B) to a plurality of the Y-address lines;
a third switch (712D) arranged to supply output address data to the first X-register (712A) or the second X-register (712B);
a fourth switch (712C) arranged to supply output address data from the first X-register (712A) or the second X-register (712B) to a plurality of the X-address lines;
a RAM memory unit (740) having stored therein the address data for specifying each pixel in regions corresponding to the plural parts; and
a timing control unit (741) adapted to provide to a timing pulse and clock, wherein the timing control unit (741) is adapted to control the timing of the switching of the switches (711D, 711G, 712D, 712C), such that when X-address data is being read from one of the X-registers (712A, 712B), the next X-address data is being written into the other X-register (712B, 712A), and, when Y-address data is being read from one of the Y-registers (711A, 711B), the next Y- address data is being written into the other Y-register (711B, 711A).

2. The imaging apparatus according to claim 1, further comprising:
a display (501) arranged monitor an imaging signal from the imaging unit, an iris mechanism (402) and a focus mechanism (401) on the front side of the imaging unit, and an imaging condition control device (820) arranged to control the iris mechanism (402) and focus mechanism (401),
wherein the imaging condition control device (820) controls the iris mechanism (402) and focus mechanism (401) on the basis of the imaging signals from the plural regions.

## Patentansprüche

1. Abbildungsvorrichtung zur Verwendung in einer Inspektionsmaschine, welche die Auslegung mehrerer Teile auf einem Substrat (701) inspiziert, wobei die Vorrichtung eine Abbildungseinheit umfasst, die umfasst:
einen Abbildungsbereich mit darauf ausgebildeten mehreren X-Adresszeilen und mehreren Y-Adresszeilen, wobei mehrere Pixel nahe den Schnittstellen der X-Adresszeilen und der Y-Adresszeilen ausgebildet sind, wobei jedes Pixel eine unabhängige Adresse hat, wobei der Abbildungsbereich jedes Pixel mit einer Leseadresse versieht;
**dadurch gekennzeichnet, dass** die Abbildungseinheit darüber hinaus umfasst:
ein erstes Y-Register (711A) und ein zweites Y-Register (711B), die dazu eingerichtet sind, eine beliebige Zeile aus den mehreren Y-Adresszeilen auszuwählen;
ein erstes X-Register (712A) und ein zweites X-Register (712B), die dazu eingerichtet sind, eine beliebige Zeile aus den mehreren X-Adresszeilen auszuwählen;
einen ersten Schalter (711D), der dazu eingerichtet ist, Ausgangsadressendaten an das erste Y-Register (711A) oder das zweite Y-Register (711B) auszugeben;
einen zweiten Schalter (711G), der dazu eingerichtet ist, Ausgangsadressendaten aus dem ersten Y-Register (711A) oder dem zweiten Y-Register (711B) an mehrere der Y-Adresszeilen auszugeben;
einen dritten Schalter (712D), der dazu eingerichtet ist, Ausgangsadressendaten an das erste X-Register (712A) oder das zweite X-Register (712B) auszugeben;
einen vierten Schalter (712C), der dazu eingerichtet ist, Ausgangsadressendaten aus dem ersten X-Register (712A) oder dem zweiten X-Register (712B) an mehrere der X-Adresszeilen auszugeben;
eine RAM-Speichereinheit (740), die in sich die Adressendaten gespeichert hat, um jedes Pixel in mehreren Teilen entsprechenden Bereichen zu spezifizieren; und
eine Zeitvorgabesteuereinheit (741), die dazu angepasst ist, einen Zeitvorgabeimpuls und -takt bereitzustellen, wobei die Zeitvorgabesteuereinheit (741) dazu angepasst ist, die Zeitvorgabe zum Schalten der Schalter (711D, 711G, 712G, 712C) so zu steuern, dass, wenn X-Adressendaten aus einem der X-Register (712A, 712B) ausgelesen werden, die nächsten X-Adressendaten in das andere X-Register (712B, 712A) eingeschrieben werden, und wenn Y-Adressendaten aus einem der Y-Register (711A, 711B) ausgelesen werden, die nächsten Y-Adressendaten in das andere Y-Register (711B, 711A) eingeschrieben werden.

2. Abbildungsvorrichtung nach Anspruch 1, darüber hinaus umfassend:
eine Anzeige (501), die dazu eingerichtet ist, ein Abbildungssignal aus der Abbildungseinheit zu überwachen, einen Irismechanismus (402) und einen Fokusmechanismus (401) auf der Vorderseite der Abbildungseinheit, und eine Abbildungsbedingungssteuervorrichtung (820), die dazu eingerichtet ist, den Irismechanismus (402) und den Fokusmechanismus (401) zu steuern,
wobei die Abbildungsbedingungssteuervorrichtung (820) den Irismechanismus (402) und den Fokusmechanismus (401) auf Grundlage der Abbildungssignale aus den mehreren Bereichen steuert.

## Revendications

1. Dispositif d'imagerie destiné à être utilisé dans une machine d'inspection qui inspecte la configuration de parties plurielles sur un substrat (701), le dispositif comprenant une unité d'imagerie qui comprend :
une région d'imagerie présentant une pluralité de lignes d'adresse X et une pluralité de lignes d'adresse Y formées sur celle-ci, une pluralité de pixels étant formée près des intersections des lignes d'adresse X et des lignes d'adresse Y, chaque pixel ayant une adresse indépendante, sachant que la région d'imagerie dote chaque pixel d'une adresse de lecture ;
**caractérisé en ce que** ladite unité d'imagerie comprend en outre :
un premier registre Y (711A) et un deuxième registre Y (711B) agencés pour sélectionner une ligne arbitraire parmi ladite pluralité de lignes d'adresse Y ;
un premier registre X (712A) et un deuxième registre X (712B) agencés pour sélectionner une ligne arbitraire parmi ladite pluralité de lignes d'adresse X ;
un premier commutateur (711D) agencé pour fournir des données d'adresse de sortie au premier registre Y (711A) ou au deuxième registre Y (711B) ;
un deuxième commutateur (711G) agencé pour fournir des données d'adresse de sortie depuis le premier registre Y (711A) ou le deuxième registre Y (711B) à une pluralité des lignes d'adresse Y ;
un troisième commutateur (712D) agencé pour fournir des données d'adresse de sortie au premier registre X (712A) ou au deuxième registre X (712B) ;
un quatrième commutateur (712C) agencé pour fournir des données d'adresse de sortie depuis le premier registre X (712A) ou le deuxième registre X (721B) à une pluralité des lignes d'adresse X ;
une unité de mémoire RAM (740) dans laquelle sont stockées les données d'adresse pour spécifier chaque pixel dans des régions correspondant aux parties plurielles ; et
une unité de commande de temporalité (741) apte à fournir une impulsion de temporalité et une horloge, sachant que l'unité de commande de temporalité (741) est apte à commander la temporalité de la commutation des commutateurs (711D, 711G, 712D, 712C), de telle sorte que lorsque des données d'adresse X sont lues depuis l'un des registres X (712A, 712B), les données d'adresse X suivantes sont écrites dans l'autre registre X (712B, 712A), et lorsque des données d'adresse Y sont lues depuis l'un des registres Y (711A, 711B), les données d'adresse Y suivantes sont écrites dans l'autre registre Y (711B, 711A).

2. Le dispositif d'imagerie selon la revendication 1, comprenant en outre :
un affichage (501) agencé pour surveiller un signal d'imagerie provenant de l'unité d'imagerie, un mécanisme d'iris (402) et un mécanisme de foyer (401) sur la face avant de l'unité d'imagerie, et un appareil de commande d'état d'imagerie (820) agencé pour commander le mécanisme d'iris (402) et le mécanisme de foyer (401),
sachant que l'appareil de commande d'état d'imagerie (820) commande le mécanisme d'iris (402) et le mécanisme de foyer (401) sur la base des signaux d'imagerie provenant des régions plurielles.
